(19) Europäisches Patentamt

European Patent Office

Office européen des brevets

(11) Veröffentlichungsnummer: **0 363 562 B1**

# EUROPÄISCHE PATENTSCHRIFT

(12)

(45) Veröffentlichungstag der Patentschrift: **09.02.94**

(21) Anmeldenummer: **89110074.5**

(22) Anmeldetag: **03.06.89**

(51) Int. Cl.⁵: **C08K 5/09**, C08L 21/00,
C07C 51/41

(54) **Vulkanisationsaktivator sowie Verfahren zu dessen Herstellung.**

(30) Priorität: **20.09.88 DE 3831883**

(43) Veröffentlichungstag der Anmeldung:
**18.04.90 Patentblatt 90/16**

(45) Bekanntmachung des Hinweises auf die
Patenterteilung:
**09.02.94 Patentblatt 94/06**

(84) Benannte Vertragsstaaten:
**ES FR GB IT LU**

(56) Entgegenhaltungen:
**EP-A- 0 172 410**
**GB-A- 1 142 195**
**GB-A- 2 105 345**

(73) Patentinhaber: **Schill & Seilacher GmbH & Co.**
**Moorfleeterstrasse 28**
**D-22113 Hamburg(DE)**

(72) Erfinder: **Umland, Henning, Dr.**
**Barwegkoppel 16**
**D-2090 Winsen/Luhe(DE)**

(74) Vertreter: **UEXKÜLL & STOLBERG Patentan-**
**wälte**
**Beselerstrasse 4**
**D-22607 Hamburg (DE)**

**Beschreibung**

Die Erfindung betrifft einen Vulkanisationsaktivator auf Basis von Zinksalzen organischer Carbonsäuren für mit Schwefel zu vulkanisierende Kautschukmischung.

Es ist z.B. aus "Ullmanns Encyklopädie der technischen Chemie", Band 9, (1957), Seite 387, bekannt, das System Kautschuk-Schwefel-Beschleuniger-Zinkoxid durch Zugabe von Fettsäuren wie Stearinsäure oder von Zinksalzen von Fettsäuren, wie Zinkstearat oder Zinklaurat, zusätzlich zu aktivieren. Diese Aktivatoren bringen eine zusätzliche Verbesserung der mechanischen Eigenschaften der Vulkanisate und teilweise auch eine Abkürzung der Vulkanisationsdauer. Daneben ergeben die Fettsäuren und fettsauren Salze eine Verbesserung der Verarbeitbarkeit und meistens auch einen verzögerten Vulkanisationseinsatz.

Es ist aus R.F. Grossmann et al aus "Rubber + Plastic News" (1987) auch bekannt, Zinksalze einer aromatischen Carbonsäure, wie beispielsweise der Terephthalsäure einzusetzen, jedoch sind diese auf Grund ihres hohen Schmelzpunktes in der Regel nur durch Fällung herzustellen und lassen sich insbesondere schwer homogen in der Kautschukmischung verteilen.

Der Erfindung liegt die Aufgabe zugrunde, einen neuen Vulkanisationsaktivator vorzuschlagen, der sich homogen im Kautschuk verteilen läßt sowie längere Reversionszeiten und höhere Elastizitätsmoduli bei der Vulkanisation ergibt. Ferner ist es Aufgabe, einen derartigen Vulkanisationsaktivator auf einfache Weise in einer leicht pastillierbaren Form herzustellen.

Zur Lösung dieser Aufgabe wird ein Vulkanisationsaktivator gemäß Anspruch 1 bzw. ein Verfahren zur Herstellung desselben gemäß Anspruch 3 vorgeschlagen.

Überraschenderweise hat sich gezeigt, daß sich ein Vulkanisationsaktivator aus einem Zink-Mischsalz einer Carbonsäure oder eines Carbonsäuregemisches der allgemeinen Formel R-COOH, in der R einen Alkyl-, Cycloalkyl- oder Arylalkylrest mit 5 bis 17 und vorzugsweise 7 bis 11 C-Atomen bedeutet, und einer aromatischen Carbonsäure als homogene Masse herstellen und hervorragend homogen im Kautschuk verteilen läßt und im Vergleich zu den üblicherweise verwendeten Aktivatoren, wie Stearinsäure, Zinkstearat, Zink-2-Ethylcapronat längere Reversionszeiten bei der Vulkanisation ergibt und ferner Vulkanisate mit höherem Elastizitätsmodul liefert. Darüber hinaus zeigen die Vulkanisate einen verringerten Druckverformungsrest, eine höhere Hitzebeständigkeit und eine bessere dynamische Belastbarkeit.

Das erfindungsgemäße Verfahren erfolgt durch Umsetzung von 1 bis 1,5 Mol Zinkoxid, Zinkhydroxid oder Zinkcarbonat mit 2 Mol eines Carbonsäuregemisches bestehend aus 0,1 bis 1,9 Mol einer Carbonsäure oder eines Carbonsäuregemisches der oben angegebenen Formel und 0,1 bis 1,9 Mol einer aromatischen Carbonsäure, wobei Benzoesäure oder substituierte Benzoesäuren wie z.B. Chlorbenzoesäure oder Methylbenzoesäure besonders bevorzugt werden. Andere geeignete aromatische Carbonsäuren sind polyzyklischer Art, wie z.B. Naphthoesäure und deren Substitutionsprodukte sowie Carbonsäuren heterozyklischer Aromaten.

Im allgemeinen wird das auf eine Temperatur von 100 bis 200°C erwärmte Carbonsäuregemisch mit der Zinkverbindung unter Rühren versetzt und die flüchtigen Reaktionsprodukte wie Wasser oder Kohlendioxid entfernt. Nach Abkühlen der Schmelze erhält man hartwachsartige bis pastenförmige Produkte, die in üblichen Anlagen aus der Schmelze pastilliert bzw. abgefüllt werden.

**Beispiel 1**

1,0 Mol Zinkoxid wird unter Rühren in eine auf 150°C erwärmte Mischung aus 1,4 Mol $C_8$- bis $C_{10}$-Kokosvorlauffettsäure und 0,6 Mol Benzoesäure eingetragen und so lange bei dieser Temperatur belassen, bis kein Wasserdampf mehr entweicht. Die erhaltene klare Schmelze ergibt nach dem Erkalten eine farblose spröde Masse mit einem Tropfpunkt von 100°C.

**Beispiel 2**

Es wurde analog Beispiel 1 gearbeitet, wobei jedoch jetzt eine Mischung von 1,4 Mol einer $C_8$- bis $C_{10}$-Kokosvorlauffettsäure und 0,6 Mol 2-Methylbenzoesäure eingesetzt wurde.
Es wurde eine farblose Masse mit einem Tropfpunkt von 99°C erhalten.

**Beispiel 3**

Es wurde analog Beispiel 1 und 2 gearbeitet. Als Carbonsäuregemisch wurde jedoch eine Mischung von 1,4 Mol einer $C_8$- bis $C_{10}$-Kokosvorlauffettsäure und 0,6 Mol 2-Chlorbenzoesäure eingesetzt. Es wurde eine farblose Masse mit einem Tropfpunkt von 103°C erhalten.

**Beispiel 4**

Es wurde eine Naturkautschukmischung mit dem folgenden Rezeptaufbau hergestellt:

| Bestandteile: | Gewichtsteile: |
|---|---|
| Naturkautschuk (RSS1) | 100 |
| Ruß N-330 | 40 |
| ZnO | 5 |
| Alterungsschutzmittel (TMQ) | 1 |
| Beschleuniger | 0,5 |
| Schwefel | 2,5 |

Der Beschleuniger bestand aus N-Morpholinylbenzothiacylsulphenamid.

Als Aktivator für den Beschleuniger wurden als Vergleichsansatz einmal 1 bzw. 3 bzw. 5 Gewichtsteile Stearinsäure (Versuche 1 bis 3) und zum anderen 1 bzw. 3 bzw. 5 Gewichtsteile des gemäß Beispiel 1 hergestellten Aktivators (Versuche 4 bis 6) und ferner 5 Gewichtsteile eines Aktivators gemäß Beispiel 2 (Versuch Nr. 7) und 5 Gewichtsteile eines Aktivators gemäß Beispiel 3 (Versuch Nr. 8) eingesetzt.

In der folgenden Tabelle I sind die physikalischen Daten aufgeführt, nämlich:

a) die maximale Vulkanisationszeit bei 160°C;

b) der Modul 300%, gemessen nach DIN 53 504 in MPa;

c) die Zerreißfestigkeit nach DIN 53 504;

d) die Dehnung nach DIN 53504 in %;

e) die Vulkanisationsdaten, die mit einem Monsanto-Rheometer bei 160°C ermittelt wurden, nämlich

$t_2$ die Anvulkanisationszeit in Minuten, wobei die Zeit gemessen wird, nach der das Drehmoment des Rotors um 2 Einheiten angestiegen ist,

$t_{90}$ die Zeit, nach welcher 90% des maximalen Drehmoments des Rotors erreicht werden,

$t_{95R}$ die Zeit, die das am Rotor auftretende Drehmoment benötigt, um von dem Vulkanisationsoptimum (100%) auf 95% abzusinken und die der Reversionszeit entspricht,

f) die Reversionsstabilität, gemessen als Quotient von $t_{95R}:t_{90}$,

g) der Druckverformungsrest des Vulkanisates, gemessen in % nach DIN 53517,

h) die dynamische Belastbarkeit der Vulkanisate, die mit einem Kompressions-Flexometer (nach Goodrich) bestimmt wird, und zwar durch den Temperaturanstieg der Prüfkörper nach einer definierten Anzahl von Verformungszyklen bei vorgegebener Frequenz sowie durch die bleibende Verformung der Prüfkörper nach der Messung.

Aus den gemessenen Reversionszeiten können Rückschlüsse auf die Hitzebeständigkeit gezogen werden, da die Übervulkanisation im Prinzip eine anaerobe thermische Alterung darstellt.

Die Tabelle I zeigt deutlich eine erhebliche Verbesserung der Reversionszeiten und des Druckverformungsrestes sowie eine Erhöhung der Moduli.

Die Tabelle II zeigt die Verbesserung der dynamischen Belastbarkeit, erkennbar am geringeren Temperaturanstieg der Prüfkörper bzw. an der längeren Lebensdauer der Prüfkörper. Zum Vergleich wurden gebräuchliche Aktivatoren wie Stearinsäure, Zinkstearat und Zink-2-ethylcapronat herangezogen.

Auch die verringerte bleibende Verformung nach der Prüfung zeigt die verbesserte dynamische Belastbarkeit der Vulkanisate.

## Tabelle I

| Versuch | 1 | 2 | 3 | 4 | 5 | 6 | 7 | 8 |
|---|---|---|---|---|---|---|---|---|
| Staerinsäure | 1 Tl. | 3 Tle. | 5 Tle. | | | | | |
| Aktivator Beisp. 1 | | | | 1 Tl. | 3 Tle. | 5 Tle. | | |
| Aktivator Beisp. 2 | | | | | | | 5 Tle. | |
| Aktivator Beisp. 3 | | | | | | | | 5 Tle. |
| Vulkanisationszeiten (min) bei 160°C | 15 | 15 | 16 | 14 | 16 | 20 | 20 | 20 |
| Modul 300% [MPa] | 7,8 | 9,2 | 8,9 | 8,2 | 11,1 | 12,0 | 13,4 | 13,4 |
| Zerreißfestigkeit [MPa] | 23,6 | 26,0 | 26,4 | 24,3 | 26,0 | 23,0 | 23,0 | 25,4 |
| Dehnung [%] | 580 | 580 | 640 | 610 | 560 | 470 | 430 | 480 |
| Vulkanisationsdaten (Monsanto-Rheometer 160°C | | | | | | | | |
| $t_2$ [min] | 2,8 | 2,8 | 2,5 | 2,5 | 2,3 | 2,6 | 2,5 | 2,3 |
| $t_{90}$ [min] | 8,2 | 9,0 | 9,6 | 8,0 | 8,9 | 10,2 | 10,6 | 10,2 |
| $t_{95R}$ [min] | 28 | 32 | 35 | 28 | 45 | 75 | 85 | 70 |
| $t_{95R}:t_{90}$ | 3,4 | 3,6 | 3,6 | 3,5 | 5,1 | 7,4 | 8,0 | 6,9 |
| Druckverformungsrest [%] | | | | | | | | |
| bei 24 h, 70°C | | | 38 | | | 26 | | |
| bei 24 h, 50°C | | | 23 | | | 14 | | |

4

<u>**Tabelle II**</u>

Dynamische Belastbarkeit, gemessen am Goodrich-Flexometer

| | | Verwendeter Aktivator (je 5 Teile) | | |
|---|---|---|---|---|
| | | Stearinsäure | Zn-Stearat | Zn-2-Ethylcapronat | Akt. in Bsp. 1 |
| Kammertemperatur [°C] | 100 | | | | |
| Hub [in cm x 2,4] | 0,175 | | | | |
| Stat. Last [in kg x 0,45] | 30 | | | | |
| Frequenz [in s$^{-1}$] | 30 | | | | |
| Temperaturanstieg des Prüfkörpers [°C] nach 2 000 Zyklen | | 21 | 23 | 34 | 22 |
| nach 3 000 Zyklen | | 25 | 27 | (Prüfkörper zerstört) | 25 |
| nach 6 000 Zyklen | | 39 | 41 | (Prüfkörper zerstört) | 30 |
| Bleibende Verformung des Prüfkörpers [%] nach 7 200 Zyklen | | 33 | 34 | (Prüfkörper zerstört) | 23 |

## Patentansprüche

1. Vulkanisationsaktivator für mit Schwefel zu vulkanisierende Kautschuk-Mischungen auf Basis von Zinksalzen organischer Carbonsäuren, **dadurch gekennzeichnet,** daß der Vulkansationsaktivator aus einem homogenen Zink-Mischsalz
a) einer Carbonsäure oder eines Carbonsäuregemisches der allgemeinen Formel R-COOH, in welcher R ein Alkyl-, Cycloalkyl- oder Arylalkylrest mit 5 bis 17 C-Atomen ist und
b) einer aromatischen Carbonsäure

besteht, wobei das Mol-Verhältnis beider Komponenten a) und b) in einem Bereich von 1:19 bis 19:1 liegt.

2. Vulkanisationsaktivator nach Anspruch 1, **dadurch gekennzeichnet,** daß die Carbonsäure-Komponente a) einen Alkylrest mit 7 bis 11 C-Atomen hat und die aromatische Carbonsäure b) Benzoesäure oder eine substituierte Benzoesäure ist.

3. Verfahren zur Herstellung eines Vulkanisationssaktivators gemäß Anspruch 1 und 2, **dadurch gekennzeichnet,** daß 2 Mol eines Carbonsäuregemisches bestehend aus 0,1 bis 1,9 Mol einer Carbonsäure oder eines Carbonsäuregemisches der allgemeinen Formel R-COOH, in welcher R einen Alkyl-, Cycloalkyl- oder Arylalkylrest mit 5 bis 17 Kohlenstoffatomen bedeutet und 0,1 bis 1,9 Mol einer aromatischen Carbonsäure auf eine Temperatur von 100 bis 200°C erwärmt und unter Rühren mit 1 bis 1,5 Mol Zinkoxid, Zinkhydroxid oder Zinkcarbonat versetzt werden, worauf man nach Entfernung von Wasser bzw. Kohlendioxid die erstarrte Masse pastilliert oder als pastenförmiges Produkt abfüllt.

## Claims

1. Vulcanization activator for rubber mixtures to be vulcanized with sulphur, based on zinc salts of organic carboxylic acids, **characterized in that** the vulcanization activator consists of a homogeneous zinc mixed salt of
a) a carboxylic acid or a carboxylic acid mixture of the general formula R-COOH in which R is an alkyl, cycloalkyl or arylalkyl group with 5 to 17 C atoms and
b) an aromatic carboxylic acid,
whereby the molar ratio of the two components a) and b) is in the range 1:19 to 19:1.

2. Vulcanization activator according to claim 1, **characterized in that** the carboxylic acid component a) has an alkyl group with 7 to 11 C atoms and the aromatic carboxylic acid b) is benzoic acid or a substituted benzoic acid.

3. Process for the production of a vulcanization activator according to claim 1 or 2, **characterized in that** 2 mol of a carboxylic acid mixture consisting of 0.1 to 1.9 mol of a carboxylic acid or of a carboxylic acid mixture of the general formula R-COOH, in which R is an alkyl, cycloalkyl or arylalkyl group with 5 to 17 carbon atoms and 0.1 to 1.9 mol of an aromatic carboxylic acid, are heated to a temperature of 100 to 200°C and mixed, accompanied by stirring, with 1 to 1.5 mol zinc oxide, zinc hydroxide or zinc carbonate, whereupon, after the removal of water or carbon dioxide, the solidified composition is pelleted or packed as a pasty product.

## Revendications

1. Activateur de vulcanisation à base de sels zinciques d'acides carboxyliques organiques, pour des mélanges de caoutchouc à vulcaniser avec du soufre, caractérisé en ce que l'activateur de vulcanisation est constitué d'un sel mixte, homogène, zincique :
a) d'un acide carboxylique ou d'un mélange d'acides carboxyliques de formule générale R-COOH, dans laquelle R est un radical alkyle, cycloalkyle ou arylalkyle ayant de 5 à 17 atomes de carbone, et
b) d'un acide carboxylique aromatique,
le rapport des deux composants a) et b) étant compris, en moles, entre 1:19 à 19:1.

2. Activateur de vulcanisation selon la revendication 1, caractérisé en ce que le composant a) acide carboxylique comporte un radical alkyle ayant de 7 à 11 atomes de carbone et l'acide carboxylique aromatique b) est l'acide benzoïque ou un acide benzoïque substitué.

3. Procédé pour préparer un activateur de vulcanisation selon les revendications 1 et 2, caractérisé en ce que l'on chauffe 2 moles d'un mélange d'acides carboxyliques, composé de 0,1 à 1,9 mole d'un acide carboxylique ou d'un mélange d'acides carboxyliques de formule générale R-COOH, dans laquelle R représente un radical alkyle, cycloalkyle ou arylalkyle ayant de 5 à 17 atomes de carbone, et de 0,1 à 1,9 mole d'un acide carboxylique aromatique, à une température valant de 100 à 200°C et, sous agitation, on mélange l'ensemble avec de 1 à 1,5 mole d'oxyde de zinc, d'hydroxyde de zinc ou de carbonate de zinc, puis, après avoir éliminé l'eau et le dioxyde de carbone, on met la matière solidifiée sous forme de pastilles ou on la transvase sous forme de produit pâteux.